# EUROPEAN PATENT APPLICATION

(11) **EP 1 770 503 A2**
(43) Date of publication of application: **04.04.2007**
(21) Application number: 06017921.5
(22) Date of filing: 28.08.2006
(51) Int. Cl.: G06F 3/12

(54) **Optimizer for dual modules that process dependent channel print streams**

(30) Priority: 08.09.2005 US 714830 P; 21.02.2006 US 357083
(71) Applicant: Bowe Bell + Howell Company, Durham NC 27713-1803 (US)
(72) Inventor: Klopsch, Karl, Fair Oaks, CA 95628 (US); Meister, Uwe, Elk Grove, CA 95757 (US)
(74) Representative: Zimmermann, Tankred Klaus

(57) **Abstract**

Two or more dependent print streams destined for individual print stream processing modules are optimized by processing the data for the print streams prior to printing. The process of optimizing includes receiving an input representing a plurality of documents to be printed and determining an attribute of each document of the plurality of documents represented by the input. The attribute relates to processing of the respective document through the document processing system. Optimization involves balancing an operation time of the first print stream processing module with an operation time of the second print stream processing module, by assigning the plurality of documents to the one or more print streams such that each document having a page count higher than one is processed in part by the second print stream processing module concurrently with a number of available single page documents and the first page of each document having a page count higher than one being processed by the first print stream processing module, the number of available single page documents being approximately equal to the sum total of the documents assigned to the second print stream.

## Description

### Related Applications

This application claims the benefit of U.S. Provisional Application No. 60/714,830, Filed on September 8, 2005, entitled "DUAL DEPENDENT CHANNEL PRINT STREAM PROCESSING MODULE OPTIMIZER," the disclosure of which also is entirely incorporated herein by reference.

### Technical Field

The subject matter presented herein relates to a method, apparatus and program product for optimizing document data of print streams for processing through at least two dependent print stream modules prior to document printing.

### Background

Mail processing facilities often use highly efficient mail processing machines, such as cutters for cutting mail pieces as needed, folding machines for aligning and folding mail pieces, inserters for inserting mail into envelopes, and sorters to sort the resulting mail pieces. High speed printers are also used in conjunction with these mail processing machines to print out the documents that are to be mass produced. Likewise, cost efficiency of mail distribution may be increased through the usage of mail sorting software, which groups mail categorically before it is ever printed, and arranges the mail in a way that allows for maximum postal discounts. Such machines, devices and software-when used in conjunction to mass produce and mass distribute mail documents-can best be described as a document processing system.

Clearly, the usage of such systems increases overall cost and work efficiency, and expedites mail distribution. When one considers that some corporations send out millions of mail packages everyday to consumers, such as billing statements or customer invoices, increased mail distribution and efficiency is of great importance. Oftentimes, when documents such as billing statements are generated for distribution, the different pages comprising the bill vary in size. It is not uncommon for the very first page of the billing statement to be of a larger size (e.g., 8.5" X 15") than the other standard size (e.g., 8.5" X 11") pages that make up the statement. Usually, the bill contains anywhere from one to fifteen pages, where only the first page (typically representing pages 1 and 2, front and back respectively) is of the larger size, and the other pages are of the smaller size. For maximum efficiency in assembling documents having two different paper sizes, the document processing system is usually equipped with two print stream processing modules; one for processing larger sized documents, and the other for processing smaller sized documents. Likewise, there are usually one or more accumulators, for assembling the pages related to a document together as they are processed by the document processing system. Because the various pages of the document are processed by separate print stream processing modules, but require a single accumulation to complete the document, this causes one print stream processing module to have a dependency upon the other. The control system for the document processing system ensures that all of the pages needed to complete a document are ready for accumulation at the same time even though the pages were processed on two separate but dependent print stream processing modules.

As the number of pages for a given document increase, overall speed per document of an inserter decreases. This is because as a larger document is assembled, components upstream from an assembly module slow down until assembly is complete. Hence, the assembly module, or accumulator, limits the speed of the entire machine. In cases where we have separate print stream processing modules for different sized documents, when a document is comprised of only one page being rendered via the first print stream channel, the second channel will accumulate its next contribution to a future bill, and then stop until the matching facing page being produced by first channel is ready. This results in the loss of one or more processing cycles. Even still, whenever a group of documents having more than one page is to be processed, channel one must wait for accumulation of the pages being processed via channel two. Inevitably, these efficient document processing systems, which are capable of cycling at high rates, are limited in their efficiency to the extent that their throughput capability is limited.

For the above stated reasons, a need has arisen to increase the throughput of document processing systems while maintaining postal discounts.

### Summary

The teachings herein alleviate one or more of the above noted problems with a method and system for optimizing one or more print files prior to printing, to improve processing of documents in one or more print streams. Print streams are destined for at least a first print stream processing module and a second print stream processing module. The print streams have a dependency upon each other in order to correctly complete print stream processing module operations within a document processing system. An exemplary optimizing technique involves balancing an operation time of the first print stream processing module with an operation time of the second print stream processing module

A disclosed example of such a method involves analyzing the print file and establishing an order of assignment of one or more documents to an optimized print file prior to the operation of the two or more dependent print processing modules. The assigned order in the optimized file is based on the analysis of the print file. The establishing step assigns one or more single page documents to the optimized print file prior to assigning a multiple page document, such that the operation time of the two or more dependent print stream processing modules are approximately balanced.

The detailed description below also discloses a method for generating an optimized version of a print file, which involves generating an ordered representation of the print file, wherein the print file specifies a plurality of single page count documents and multiple page count documents. This method also involves determining, from the ordered representation of the print file, a number of single page count documents to be placed ahead of a first page of a multiple page count document. Single page count documents are assigned to the optimized version of the print file, before assigning the first page of the multiple page count document.

The examples disclosed herein also include a method for optimizing a print stream to be processed by first and second print stream processing modules. This technique involves assigning at least a first page of a multiple page count document and a number of single page count documents to the first print stream processing module. A number of pages representative of subsequent pages of the multiple page count document are assigned to the second print stream processing module. The one or more single page count documents are assigned to the first print stream processing module, prior to assigning the first page of the multiple page count document, such that the operation times of the first print stream processing module and the second print stream processing module are approximately balanced.

Additional advantages and novel features will be set forth in part in the description which follows, and in part will become apparent to those skilled in the art upon examination of the following and the accompanying drawings or may be learned by production or operation of the examples. The advantages of the present teachings may be realized and attained by practice or use of the methodologies, instrumentalities and combinations particularly pointed out in the appended claims.

### Brief Description of the Drawings

The drawing figures depict one or more implementations in accord with the present teachings, by way of example only, not by way of limitation. In the figures, like reference numerals refer to the same or similar elements.

Fig. 1 depicts an exemplary high-level block diagram of a document processing system.

Fig. 2 depicts an exemplary computer used in conjunction with the document processing system described herein.

Fig. 3 depicts an exemplary simplified document processing system.

Fig. 4 Illustrates how a group of documents would be organized on a printed medium in order to maximize the throughput of an inserter equipped with two dependant input processing modules.

Fig. 5 illustrates a possible grouping of documents prior to optimization for maximum inserter throughput. These documents will be referenced during the description of print stream optimization techniques.

Fig. 6 is a flow chart of the steps that are performed before print stream optimization.

Fig. 7 is an overall process flow chart for the steps in print stream optimization.

Figs. 8, 8a and 8b illustrate the structure of the data files that are used for print stream optimization.

Fig. 9 is an exemplary flow chart depicting a method for generating an optimized print file to be executed by one or more printers of the document processing system.

Fig. 10 is an illustration of a print file after print stream optimization is completed.

### Detailed Description

In the following detailed description, numerous specific details are set forth by way of examples in order to provide a thorough understanding of the relevant teachings. However, it should be apparent to those skilled in the art that the present teachings may be practiced without such details. In other instances, well known methods, procedures, components, and circuitry have been described at a relatively high-level, without detail, in order to avoid unnecessarily obscuring aspects of the present teachings.

Prior to printing, optimizing one or more multiple document print files involves a manipulation of soft copy document(s) in the print file for a mail run. Similarly, optimizing may involve the manipulation of print file data, wherein the data is representative of the print file or softcopy documents to be generated by the printer. So, for example, soft copies of documents may be reordered in the print file to pair-up soft copies of documents with odd numbers of pages, to avoid mismatches during two-up printing. Another example of optimizing balances an operation time of parallel print stream processing modules. In such an example, each soft copy document in the print file for a group of mail pieces may be assigned to a print stream for actual documents that will be processed through one of the modules, based on an attribute of the respective document (soft copy or actual), so as to optimize downstream parallel processing of the printed documents through the modules. The manipulation of the soft copy documents, such as via the print file, may also optimize other aspects of the subsequent processing of the printed documents, e.g. to facilitate sorting and/or to maximize postal discounts on the finished document set. More detailed discussions of examples of such print stream optimizing may be found in the above-incorporated Utility Application No. 11/217,458, entitled "MULTI-PRINT STREAM PROCESSING MODULE OPTIMIZER FOR DOCUMENT PROCESSING." Examples discussed below optimize processing through parallel processing lines, where the processing by the two lines is interdependent.

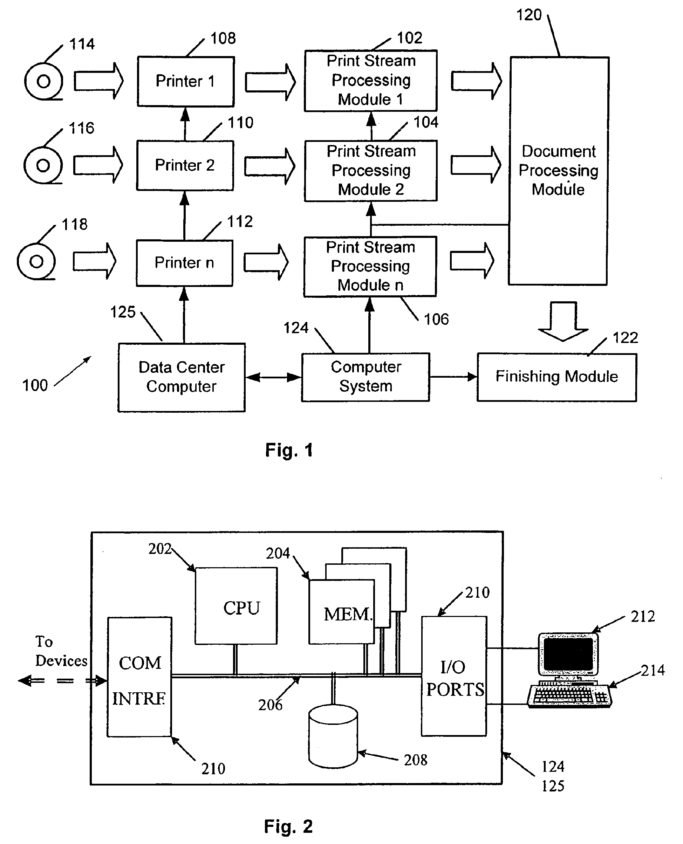

Fig. 1 depicts a high-level block diagram of a document processing system 100 for which throughput can be optimized utilizing the novel concepts discussed herein. Essentially, the system 100 comprises a plurality of print stream processing modules 1 - n. The print stream processing module 1 is designated by number 102, the print stream processing module 2 is designated by 104, and the nth print stream processing module is designated by number 106. There may be two, three or more print stream processing modules. Each print stream processing module 102, 104, 106 may perform one or various operations such a material cutting, assembly, folding, material authentication, etc. Each is modular in the sense that each can be designed differently to perform one or various functions. The novel concepts discussed herein are not limited to the number of print stream processing modules or specific functions of each discussed herein.

Upstream from each print stream processing module 102, 104, 106 are printers 108, 110, 112, each fed from a roll of continuous form material 114, 116, 118. However, non-continuous material (e.g., individual sheets or fan folded) may be used. The printers 108, 110, 112 generate a print stream for the print stream processing modules 102, 104, 106, respectively. Each print stream processing module 102, 104, 106 is shown to receive a print stream from each printer 108, 110, 112, respectively. The manner in which the print streams are provided to the print stream processing modules are not limiting to the novel concepts herein. The print streams may be applied in an online manner, i.e., where the output of each printer fed directly to a respective print stream processing module. Alternatively, the print streams may be generated offline, and assembled in bins, which are later processed on the print stream processing modules. Moreover, a printer 108, 110, 112 may feed more than one print stream processing module 102, 104, 104. A printer 108, 110, 112 may have two outputs each outputting a print stream to two print stream processing modules 102, 104, 106. One printer is generally not allocated to a single print stream processing module.

A document processing module 120 positioned downstream from the print stream processing modules 102, 104, 106 processes the output of each print stream processing module. Exemplary processes may include a machine for inserting material, such as credit cards, personalized statements, advertisements, etc. A finishing module 122 positioned downstream from the document processing module 120 may be utilized to insert material in an envelope, sort the output mail, etc.

Each of the printers 108, 110, 112, print stream processing modules 102, 104, 106, document processing module 120 and finishing module 122 may be controlled by a computer system 124. The computer system 124 may have numerous functions associated with system operation, such as controlling the operation of each print stream processing module 102, 104, 106, document processing module 120 and finishing module 122. A data center computer 125 is generally included to perform such tasks as generating print files for each printer 108, 110, 112 from a job file, presorting the print files according to postal authority rules and for print stream optimization. The data center computer 125 may also communicate with one or more detectors (not shown), which monitor documents as they are processed by each print stream processing module 102, 104 and 106. The detector may be a camera or barcode scanner used to detect various attributes of the material, and placed at various positions within the document processing system 100 for optimal detection of a document at a given phase of processing. The positioning and usage of detectors is well within the level of one of ordinary skill in the art and shall not limit the novel concepts discussed herein. Those skilled in the art will also recognize that while computers 124 and 125 are shown as a single computer, a system 100 may use a network of controlled computers to implement the relevant data processing and/or control functions.

Fig. 2 is a functional block diagram of such a computer system 124 or 125. The computer system 125 receives print files or generates print files from a job file, develops optimized print files, and sends print files to printers 108 - 110. Print streams are influenced by the print file, which may be any electronic or computer-readable medium for representing a print stream (output). The print file may also include any data that is to be printed (output) by the printer, such as data representative of various softcopy documents requiring processing by the print stream processing modules. Hence, print files include data representative of the documents to be produced, data for affecting the behavior or manner of operation of a printer. Based on these print files, the computer system 125 may send Mailer USPS or other postal authority documentation to a printer (not shown) or another appropriate output device based the print files sent to the printer.

The exemplary computer system 124 or 125 may include a central processing unit (CPU) 202, memories 204, and an interconnect bus 206. The CPU 202 may contain a single microprocessor, or may contain a plurality of microprocessors for configuring the computer system 124 as a multi-processor system. The memories 204 include a main memory, a read only memory, and mass storage devices such as various disk drives, tape drives, etc. The main memory typically includes dynamic random access memory (DRAM) and high-speed cache memory. In operation, the main memory stores at least portions of instructions for execution by the CPU 202 and data for processing in accord with the executed instructions.

The mass storage 208 may include one or more magnetic disk or tape drives or optical disk drives, for storing data and instructions for use by CPU 202. For a workstation PC, for example, at least one mass storage system 208 in the form of a disk drive or tape drive, stores the operating system and application software as well as a data file. The mass storage 208 within the computer system 124 may also include one or more drives for various portable media, such as a floppy disk, a compact disc read only memory (CD-ROM or DVD-ROM), or an integrated circuit non-volatile memory adapter (i.e. PC-MCIA adapter) to input and output data and code to and from the computer system 124.

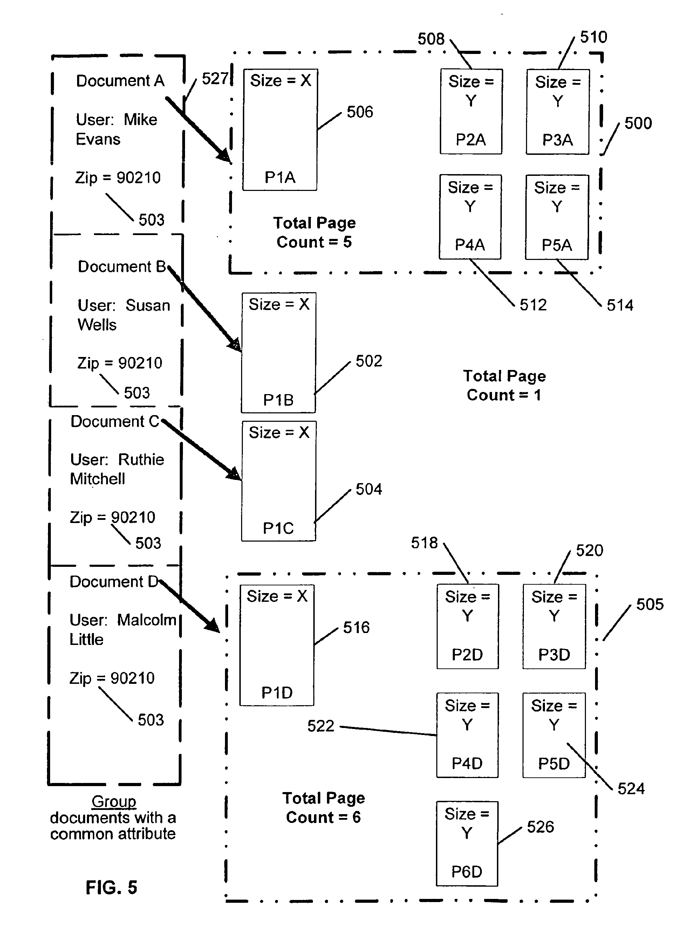

The computer system 124/125 also includes one or more input/output interfaces 210 for communications, shown by way of example as an interface for data communications via a network or direct line connection. The interface may be a modem, an Ethernet card or any other appropriate data communications device. The physical communication links may be optical, wired, or wireless. The network or discrete interface may further connect to various electrical components of the document processing modules, discussed herein, to transmit instructions and receive information for control thereof. The network or discrete interface also will connect to the detector 530 (shown in Fig. 5) to receive data associated with the printed material. The network shall include any type of communication implementation for receiving and transmitting information to and from components of the document processing system 100 and components external to and/or remote from the system 100.

The computer system 124 / 125 may further include appropriate input/output ports for interconnection with a display 212 and a keyboard 214 serving as the respective user interface. For example, the computer system 124/125 may include a graphics subsystem to drive the output display. The output display may include a cathode ray tube (CRT) display or liquid crystal display (LCD). Although not shown, the PC type system typically would include a port for connection to a printer. The input control devices for such an implementation of the system would include the keyboard for inputting alphanumeric and other key information. The input control devices for the system may further include a cursor control device (not shown), such as a mouse, a trackball, a touchpad, stylus, or cursor direction keys. The links of the peripherals to the system may be wired connections or use wireless communications.

The computer system 124/125 shown and discussed is an example of a platform supporting processing and control functions of the document processing system described herein. The optimizing functions and the computer processing operations discussed herein may reside on a single computer system, or two separate systems; or one or both of these functions may be distributed across a number of computers.

The software functionalities of the computer system 124 / 125 involve programming, including executable code as well as associated stored data. Software code is executable by the general-purpose computer 124 that functions as an inserter controller. The data center computer 125 functions more as a data processor versus a real time controller. In operation, the code and possibly the associated data records are stored within the general-purpose computer platform 124 / 125. At other times, however, the software may be stored at other locations and/or transported for loading into the appropriate general-purpose computer system. Hence, the embodiments involve one or more software products in the form of one or more modules of code carried by at least one machine-readable medium and/or products in the form of optimized print files carried by such media. Execution of the code by a processor of the computer platform enables the platform to implement the print stream optimization and related document processing control functions, e.g. to generate an optimized print file, in essentially the manner performed in the embodiments discussed and illustrated herein.

As used herein, terms such as computer or machine "readable medium" refer to any medium bearing the code or instruction or bearing print file data that may participate in providing instructions or data to a processor for execution. Such a medium may take many forms, including but not limited to, non-volatile media, volatile media, and transmission media. Non-volatile media include, for example, optical or magnetic disks, such as any of the storage devices in any computer(s) operating as one of the computer platforms 124 or 125, discussed above. Volatile media include dynamic memory, such as main memory of such a computer platform. Physical transmission media include coaxial cables; copper wire and fiber optics, including the wires that comprise a bus within a computer system. Carrier-wave transmission media can take the form of electric or electromagnetic signals, or acoustic or light waves such as those generated during radio frequency (RF) and infrared (IR) data communications. Common forms of computer-readabie media therefore include, for example: a floppy disk, a flexible disk, hard disk, magnetic tape, any other magnetic medium, a CD-ROM, DVD, any other optical medium, punch cards, paper tape, any other physical medium with patterns of holes, a RAM, a PROM, and EPROM, a FLASH-EPROM, any other memory chip or cartridge, a carrier wave transporting data or instructions, cables or links transporting such a carrier wave, or any other medium from which a computer can read programming code and/or data. Many of these forms of computer readable media may be involved in carrying one or more sequences of one or more instructions or print file data to a processor for execution or processing.

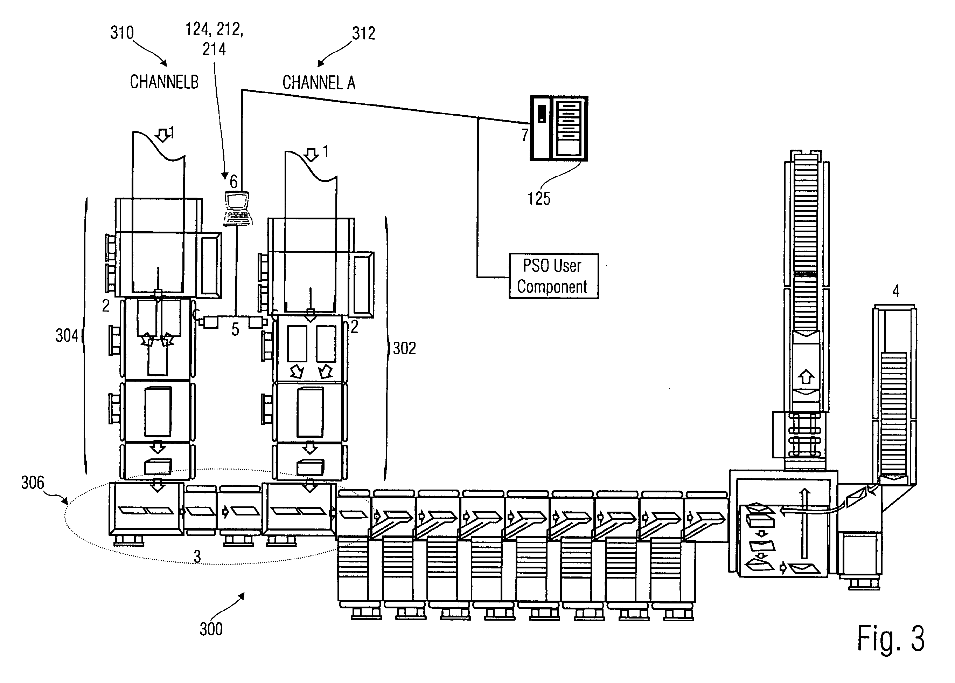

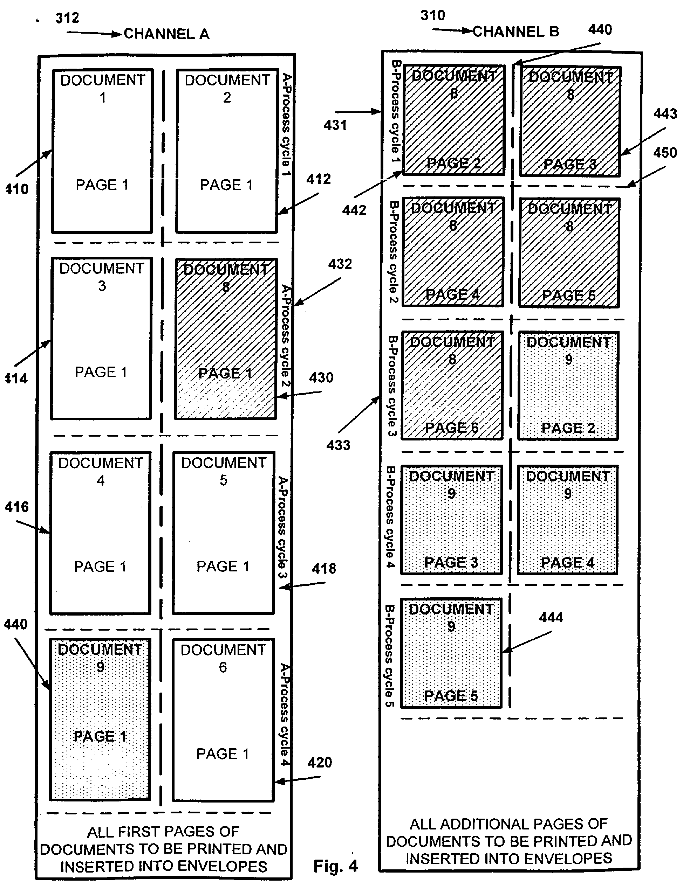

The operation of a print stream optimization (PSO) process to reorder documents in a print stream for insertion on a dual dependant channel inserter is exemplified with Figs. 3 and 4. Fig. 3 shows a document processing system 300 that is equipped with two print stream processing modules 302 and 304 for processing documents received from the one or more printers of Fig. 1 108, 110, 112. Upstream from the print stream processing modules are input channels for receiving from the printers, printed or hardcopy documents to be processed by processing modules 304 and 302, labeled Channel B 310 and Channel A 312 respectively (the channel may be taken to correspond to a print stream). Channel B 310, is configured to process documents with certain attributes, while Channel A 312 is configured to process documents with different attributes. In the example discussed, the attribute difference between the two streams or channels is page or sheet length. The document processing system 300 may also be equipped with, or coupled to, one or more computers, such as computer 124 Figs. 1 and 2. Additional computers 125 operate as file servers for storing electronic data files (e.g., print files) or data representative of the various softcopy documents to be fed to the print stream processing modules 302 and 304 as hardcopy inputs. Other computers may be a network enabled and capable of managing multiple printers or inserters.

Because the document processing system 300 is equipped with two print processing modules 302 and 304 for processing different sized documents, instances of processing lag time may occur anytime a document being processed by one processing module must wait on a document being processed by another module in order for the documents to be accumulated together. So, for example, if module 302 is processing the larger sized first page of a multiple page document, while module 304 is processing the smaller sized subsequent pages of the same document, the first module 302 may require fewer processing cycles. Hence, the processing module 302 would have to wait before it could be sent to the accumulators 306-thus stalling the processing of all other documents input via Channel A 312-until all of the smaller sized pages are ready to be accumulated. This creates a "dependency" between the two modules, wherein the modules operate substantially independently in terms of the amount of time they require to process their respective documents, but are reliant upon one another to advance their respective documents downstream through the document processing system 300 for further processing.

To overcome such challenges, print stream optimization (PSO) for dual dependent print stream processing modules re-orders the contents of an electronic data file that represents numerous soft copy documents of various page counts to enable the print stream processing modules 302 and 304 to operate at maximum throughput. Specifically, a select number of available single page documents, including the first page of the multiple page documents, are re-ordered prior to being submitted for printing. The re-ordering, which may be performed using computer records, i.e., pointers, affects how the single page documents are assigned to Channel A 312 to result in the single page documents being processed in approximately the same time of completion as the subsequent pages of the multiple page document. "Pointer" is a common software term with includes any type of computer record that can be used to locate a specific data file or portion thereof either in computer memory or in permanent storage such as a hard drive. In this way, while the number of respective cycles required to complete the processing of documents in the respective modules 302 and 304 may vary, at least the larger sized first page of a multiple page document being processed by module 302 is made available for assembly at approximately the same time as the subsequent pages of the multiple page document being processed by module 304.

Moreover, the optimization is further enhanced by re-ordering the electronic data file to affect the assignment of documents to the print streams (channels A and B) such that documents having the highest page count are processed substantially first by the processing modules 302 and 304 ahead of lesser page count documents. Such prioritization maximizes the throughput capability of the print stream processing modules 302 & 304 by (1) ensuring that the more process intensive documents (highest page count documents) are processed first, and (2) by balancing the processing time of print stream processing module 302 with a select number of single page documents to have both modules completing the more process intensive (higher page count) documents at substantially the same pace. Whether the page count is 20, or two, the implementation of PSO described herein ensures such benefits.

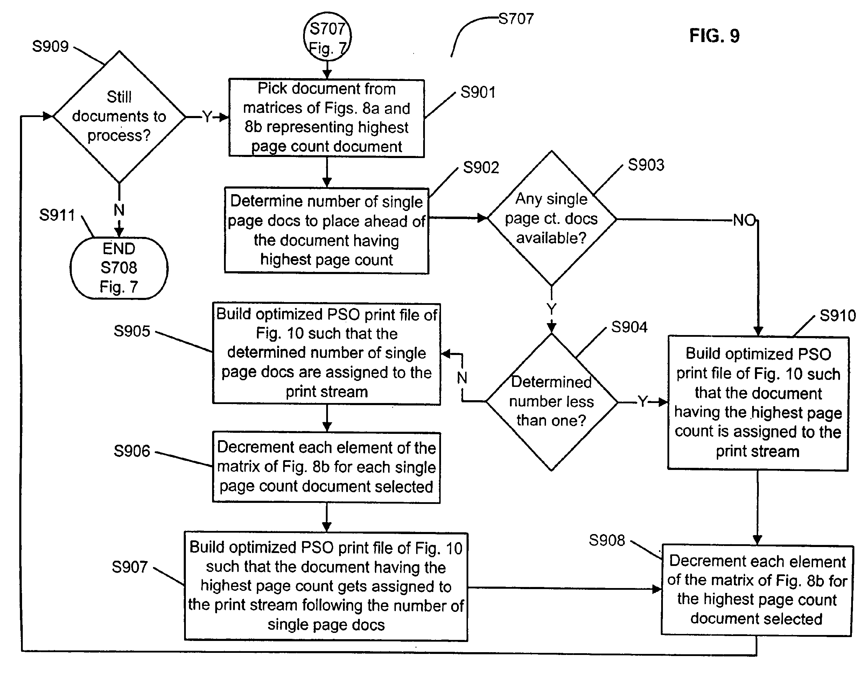

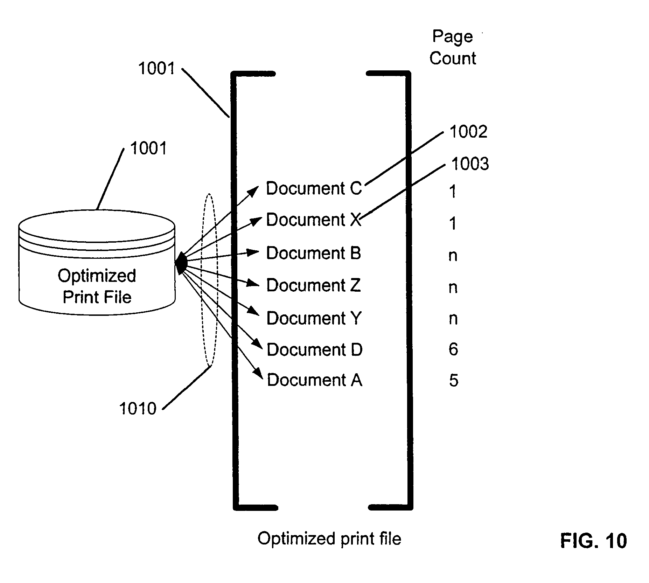

The number of available single page documents to be processed along with the highest page count document (e.g., a multiple page document) may vary from one job run or print file to the next, and may therefore be determined in various ways. One way is through trial and error or observation, wherein the number of single page documents is set by the document processing system operator, or user of the service provider interface 212, 214 Fig. 2. Another method may be based on the collection of empirical job run data or statistics accumulated during one or more runs. As yet another method of determination, a load or document balancing algorithm can be used that makes the determination on the basis of the number of single pages left to allocate within the group, relative processing speeds of the print processing modules 302 and 304, etc. This performance data is used in the selection of single page documents to match the accumulation time of a large multi page document (Fig. 10 step S902). Regardless of the chosen method of determination, the re-ordering process described above continues until all single page documents comprising the group of documents to be optimized are used. Such functionality is achieved without disrupting the desired results to be obtained from any applicable presort grouping of documents, such as zip code presorting to obtain postal discounts.

Turning now to Fig 4, an exemplary illustration of hard copy documents to be rendered in 2-up format as input to the print stream processing modules 302 and 304 as a result of the dual dependent PSO implementation are shown. In particular, Document 8 is a multiple page document of page count 6, representing the highest page count document to be processed by the print stream processing modules 302 and 304. Dependency is prevalent, as the first page of Document 8 labeled 430 (also of noticeably larger size) is required to be processed via Channel A 312, while the subsequent pages of the document (smaller sized Document 8 pages 2-6), are required to be processed via Channel B 310. Document 9, also in 2-up format, has a page count of 5, with its first page 440 to be processed via Channel A 312, and subsequent pages of to be processed via Channel B 310. Those skilled in the art will recognize readily that the implementations described herein are not limited to any particular formatting of the paper. In fact, whether the hardcopy inputs to the print stream processing modules 302 and 304 are 2-up, 1-up, duplex, etc. does not impact the scope of this disclosure, but is illustrated by way of example to better indicate the features and advantages described in the preceding paragraphs. Furthermore, while the following description depicts documents in hardcopy form for convenience, those skilled in the art will appreciate that any of the steps may be equally performed on softcopy documents, such as via the use of pointers to engage the re-ordering process on softcopy documents represented in a print file.

To achieve processing efficiency, the processor performing the print file optimization references the soft copy for the largest document, Document 8, and re-orders it in the print file. Subsequent processing will assign the pages to their respective print streams 310 and 312. As illustrated, Document 8 pages 2 442 and 3 443 are in the first position in channel B 310. One processing cycle 431 is used to cut horizontally 450 and vertically 440 to accumulate the two physical pages of the hard copy of the document. On processing cycle 3, indicated in Fig. 4 as 433, page 6 of hard copy Document 8 is complete along with page 1 430, which was completed on processing cycle 2 432 via Channel A 312. As described before, the completion of all pages of the document at substantially the same time irrespective of the number of processing cycles required was enabled through print stream optimization, by referencing a select number of single page documents 410-414 to be processed relatively in a duration of time required to process pages 2 through 6 of Document 8. Having ensured the processing of the first page 430 with the processing of the subsequent pages of Document 8, the completed hard copy document is then transferred to one or more downstream modules of the document processing system (e.g., upright modules for appending additional inserts).

The next largest document, Document 9, is referenced next in the same manner described above to influence a similar processing result. The last page of Document 9 444 is processed via Channel B 310 for completion at relatively the same time as the first page of Document 9 440. The placement of Document 9, page 1 440 is shown in the left-most position to indicate that the placement of a document during a cycle is of minor importance in the context of the exemplary embodiment described herein. Suffice it to say that the print file optimization ensures effective processing by ensuring that a number of single page documents 416-418 is selected to precede the first page of Document 9 440, such that the first page of Document 9 440 may be completed at substantially the same time as the subsequent pages of Document 9 being processed via Channel B.

The process continues until all of the single page count documents in the group are utilized. Then processing returns to normal operation. By this time, a significant number of the larger hard copy documents, which typically require the most processing effort and/or result in significant lag times on the part of the print stream processing modules, have been efficiently processed without having to regulate cycle timing.

It should be noted that while the example described with respect to Fig. 4 pertains to 2-up processing, wherein two sheets are printed and conveyed in a contiguous and continuous side-by-side and successive relationship, other processing formats may be employed without limiting the scope of the techniques and examples presented herein. Indeed, the re-ordering process described may accommodate 1-up continuous forms input or individual input. It is even possible that one print stream processing module 302 may accommodate one input type whereas the second print stream processing module 304 may accommodate a different input type. For example, module 302 may be a print roll input while module 304 may be fan fold printed sheets. Other options can be substituted by those skilled in the art. Different configurations of the machine may be utilized to assemble the documents while achieving optimal throughput.

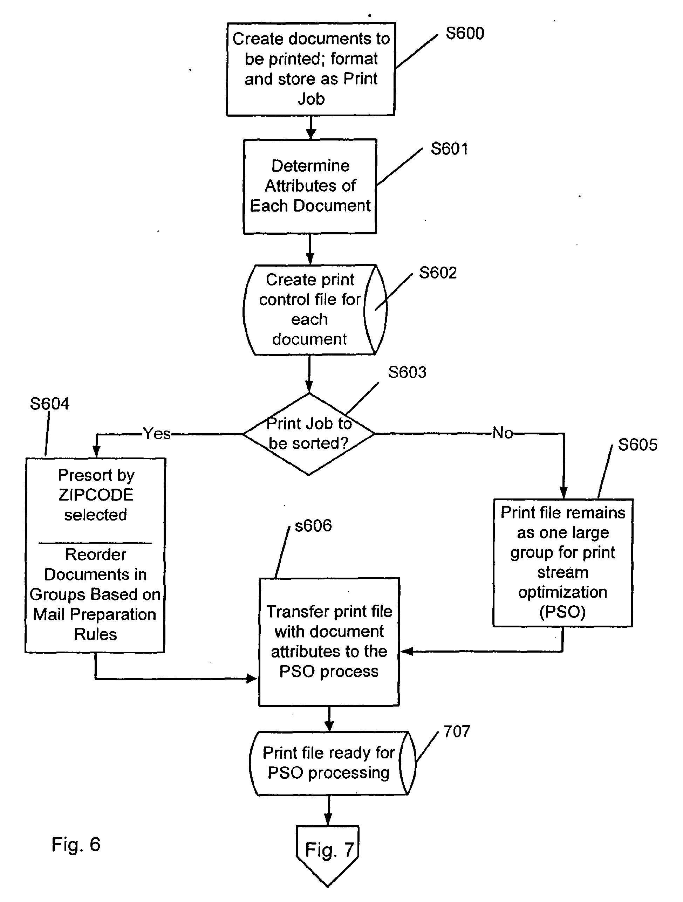

The specification now proceeds with a detailed description of specific example of the input document structure that will be optimized, with steps presented in Figs. 6 through 10 to produce the optimized printed streams of documents shown in Fig. 4. In one example, referred to in Fig. 5, four different documents A, B, C and D, capable of being processed by the print stream processing modules are shown. Generally speaking, documents within a print file are grouped based on a common attribute 503. Each group can be divided into a plurality of sub-groups. Therefore, a group of documents corresponds to one or more documents sharing a common attribute, where the documents are assigned to one or more print files.

In Fig. 5, Packet A 500, Packet B 502, Packet C 504 and Packet D 505, are assigned to different users Mike Evans, Susan Wells, Ruthie Mitchell and Malcolm Little respectively. Although the user assigned to each document is different, the documents all share a common attribute, which in this case is a common 5-digit zip code 703. This represents a common group attribute by which the documents may be presorted in accordance with mail preparation rules. Document A 500, is comprised of several individual pages, and as such, is considered a multiple page document. The page identified as P_{1A} 506, is of a larger size X, and is processed by a different print stream processing module 106 than the smaller sized pages P_{2A} 508, P_{5A} 510, P_{4A} 512, and P_{5A} 514, all of equal size Y.

The sum total of all the pages combined provides a total page count for a given document. So, for example, Document A 500, which has a total of 5 pages, has a total page count equal to 5. Documents B 502 and C 504 are single page documents that are also of size X, but have a total page count of 1. Document D 505, also a multiple page document, is comprised of several individual pages P_{1D} 516, P_{2D} 518, P_{3D} 520, P_{4D} 522, P_{5D} 524 and P_{6D} 526, and has a total page count of 6. Of all the documents, Document D 505 has the highest total page count in this example. None of the multiple page count documents in the exemplary embodiment share a common page count. Common page count is an important distinction, as will be seen in the following sections of the specification, in ensuring the effective optimization of documents within a group.

Several document processing steps may be performed prior to print stream optimization to increase processing efficiency. Fig. 6 illustrates these steps in an exemplary flow chart. In the figures depicting flow charts, the term "Step" is abbreviated by the letter "S." The process starts with document data such as billing information, bank statement, financial data or any other material that needs to be communicated to a recipient. This data is reformatted S600 into a print job for eventual printing and processing on a document processing system Fig. 3 300. Attributes of the document that define important features such as page count, duplex or simplex printing, first page attributes, color requirements, ZIPCODE and numerous other parameters required to print and finish the document are incorporated with the print job S601. It should be noted that the document attributes are encoded in the print file and therefore a separate file linking document characteristics to a specific document is not required but may be desirable, depending to the processing preferences. Of course, these are not the only examples of attributes that may be considered to optimize the print streams for the print stream processing modules fig. 3 302, 304. Once the data is collected and the attributes defined, the print file is created S602. This is the file that contains all of the data and control characters needed to correctly print and finish each document on a printer. These functions would normally be performed in the data center computer 125 (Fig. 1). However, numerous computer architectures are possible that do not materially impact the document processing system. The next step after the print file is created is to determine if the documents need to be sorted by an attribute S603. The most common attribute is ZIPCODE since the postal authority offers discounts on the postage per piece if the mail is presorted prior to delivery to the postal authority. The optimization processing discussed in the examples maintains presort groupings. Such a grouping was shown in Fig. 5, 503.

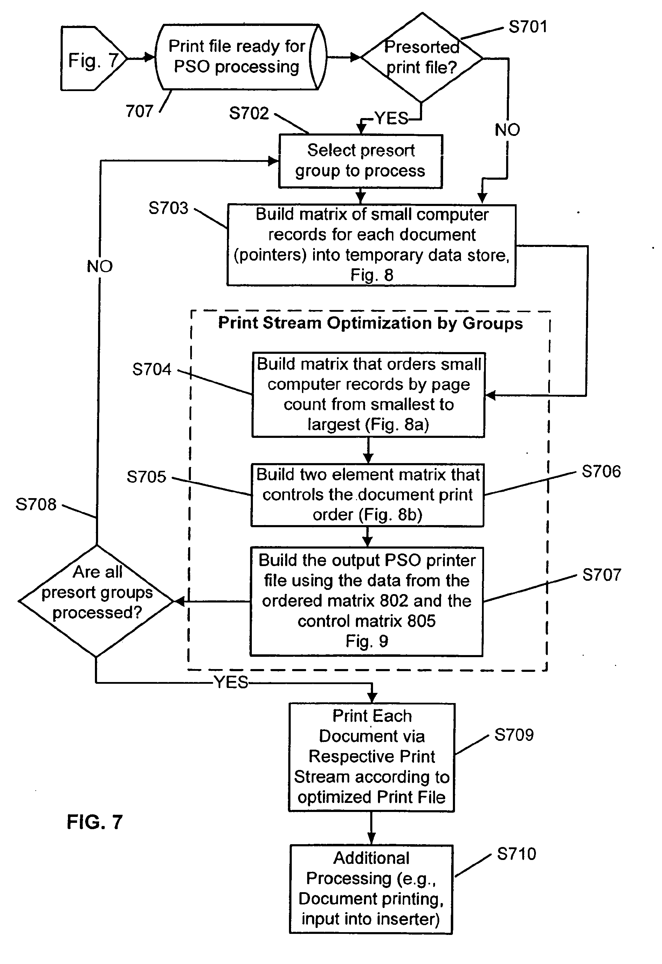

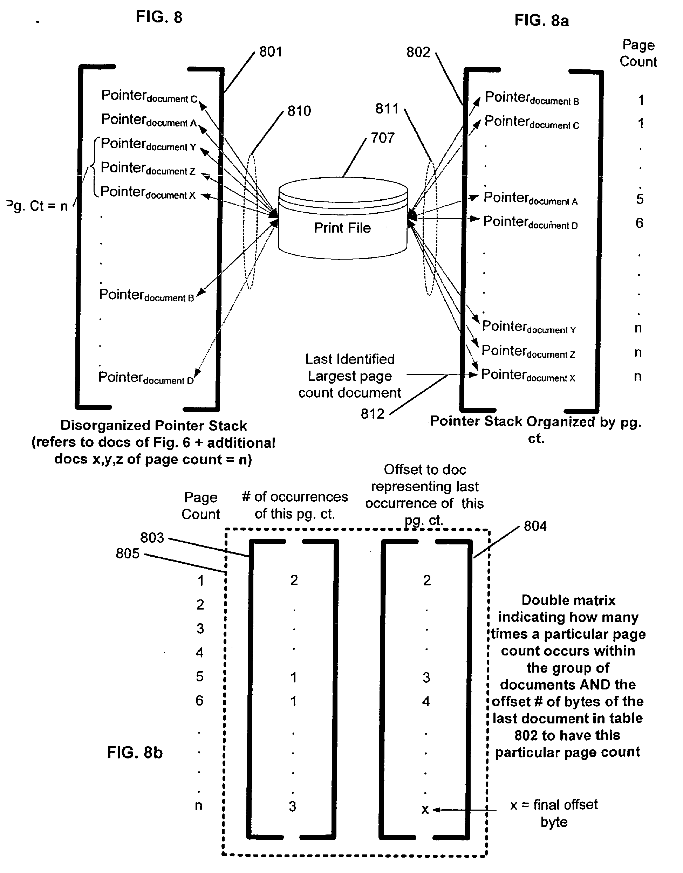

If no sorting S605 by attribute is desired, then the entire print file will remain in the order as produced in step S602. Therefore all documents belong to the same group allowing all documents in the print file 707 to be transferred to the print stream optimizing process S606. Table 1 shows a print file structure where presorting by ZIPCODE was not implemented. If sorting is required S604, then the order of the documents will be adjusted to group all documents with the same attributes together. For this example the sorting parameter is ZIPCODE. Specific mail preparation rules govern how the documents must be grouped to meet postal authority rules to qualify for postage discounts. Table 2 illustrates the new document groupings in the print file. Each of these groups 707 will be transferred to the optimizing process S606 where the group boundaries will be maintained during processing as shown in Fig. 8. Numerous software solutions are used by those skilled in the art to perform the presort operation on print files.

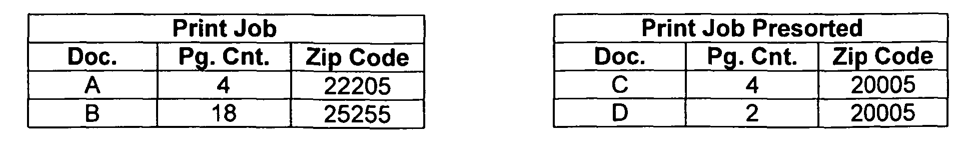

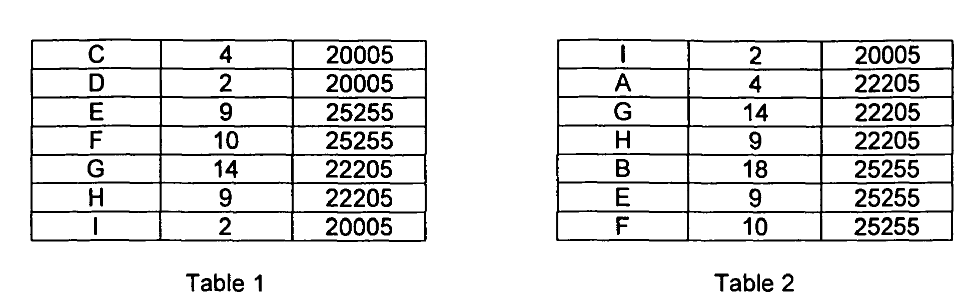

Important to the commercially successful example of print stream optimizing is to design a method to reorder the document files in the print file without actually moving the contents of this file more than absolutely necessary. A print file can be millions of records in size, and therefore actually duplicating this file multiple times in different formats would put a considerable load on the data center computer 125, plus the processing time for the optimization would be significantly extended. Fig. 7 illustrates the overall dual dependent channel optimizing process flow with supporting Figs. 8, 8a, 8b, 9 and 10, which illustrate data files and detailed optimizing steps.

The optimization-related process starts with determining if the print file 707 was presorted by any parameters where the grouping needs to be maintained S701. The example that will be used is based on presorting by ZIPCODE groups according to postal authority rules. If no presorting was performed, the process moves to the creation of the first data matrix S703, which is a stack or list of pointer references to the various documents specified in the print file. If presort was performed then the next group to process is selected S702. An iterative loop is required in the presort example S708 since each presorted group must be processed separately to avoid loss of presort integrity and accompanying loss of postage discounts. Those skilled in the art will appreciate that the print stream optimization techniques may be employed without jeopardizing the integrity of presorted data.

At this point, the group is selected and the process moves to building a matrix of pointers S703 as in Fig. 8 801. The pointer is used to enable the computer system to locate a specific document record in the print file whether the record is stored in memory or on a storage system such as a hard drive. The pointer (small computer record) also may contain some of the document attributes such as page count as in the current example. While pointers may be used to reference documents in a print file to be optimized and may be reordered to achieve optimization, those skilled in the art will recognize that the softcopy representations of the documents themselves may be manipulated to achieve the same effect, which if performed, requires no pointer usage at all. The embodiment herein is not limited to only the usage of pointers. Any means of manipulating the order in which the documents are assigned to the print file to affect the structure of the print stream to optimize performance of a document processing system is within the scope of the description herein.

Each pointer 810 points to a data record for a document in the print file 707 for the presort group being processed. These pointers maintained in this stack 901 are in no particular order, but simply refer to documents processed by presort groups. As such, this matrix of pointers or data references acts as the input file for the optimization process. Recalling Fig. 5, documents B and C are one page, document A is 5 pages, documents X, Y and Z have the same page count which is greater than 6 and document D has 6 pages. In the following paragraphs, these documents will be used to explain the PSO operations. It should be noted however, that unlike the example documents of Fig. 5, in conventional print jobs there are significantly more single page documents (two page documents if printing in duplex mode) that will be available for use with multiple page documents to achieve optimization. It is the availability of single page documents that enables the optimization process to improve inserter efficiency in the dual-dependent stream processing scenario.

PSO builds an ordered matrix Fig. 8a 802 by searching the matrix of pointers 801 in a iterative process to create a new matrix of pointers 811 that are ordered by document page count, step S704. The matrix starts with the one page documents and ends with the largest page document with all other document pointers in descending order of page count. The order of like page count document pointers is arbitrary. For the example, document pointers B and C are at the top, document pointers A and D are in the middle and the largest document pointer X is at the bottom. Once the ordered pointer matrix is complete for the presort group, the control matrix fig. 8b, 805 is generated in step S705. The control matrix 805 contains two elements. The first element 803 is an ordered list where the first entry is the number of occurrences of one page documents in the 802 ordered matrix. From the Fig. 5 example the one page count would be two. There are no examples of 2, 3 or 4 page documents so these entries are blank. Documents A and D occur next with a count of one and documents X, Y and Z are at the bottom with a count of three.

The second element is pointer offsets, 804 of the control matrix 805. The offset element contains the data necessary to access document pointers 811 for each entry that corresponds to an entry in the 803 element (occurrences of like page count documents). Each entry in the pointer offset element 804 provides the offset from the first entry in the ordered pointer matrix 802 to the last occurrence of a given page count document pointer. Returning to the Fig. 5 example, there are two one page documents, hence the occurrence element 803 first position is a 2 and the offset element 804 first position also is a2. This is because the last occurrence of a one page document pointer in the 802 matrix is in the second position. Therefore the entry is 2 since the reference to the document C pointer is in position 2 (last occurrence of a one page document). The pointers to the only occurrences of the 5 and 6 page documents are the third and fourth entries in the 802 ordered matrix, therefore the offset entries are 3 and 4 respectively. The last entry in the 802 matrix is document X, therefore the value n in the offset element 804 is the offset to the last occurrence of the largest page count document. This offset entry also equals the total number of pointers in the ordered matrix 802. If the pointer matrix is structured such that a pointer requires multiple bytes of memory, the offset values may be indexed by a value greater than one. The net result is to be able to locate that last occurrence of a like page count group of documents. Those skilled in the art can develop numerous alternative software approaches to achieve the same results without affecting the novelty of the dual dependent print stream optimization approach.

The optimization process is now ready to reorder the print file 707 into a optimized print file 1001 as shown in Fig. 10. Using the ordered matrix 802 and the control matrix 805 for the current presort group, step S707 is executed. The iterative process for the building of the optimized print file (S707) is illustrated in Fig. 9. Firstly, the largest page count document S901 in the ordered matrix 802 is selected by accessing the last entry (bottom of the matrix as illustrated in the control matrix 805 where the number of occurrences 803 of a document is not zero). The correct pointer in matrix 802 can be accessed by offsetting from the top of the matrix by the value in the offset element 804. As a result, the pointer to document X will be accessed and the page count determined. Using empirically derived data, the number of single page (two pages if duplexed) documents that need to be ordered ahead of document X in the optimized print file is determined, step S902. Since each print stream processing module 302, 304 will run at different speeds due to the different attribute of the first page and subsequent pages in a document, the number of single page documents needed to balance out the larger page count documents is not a one to one correspondence. Next, the first entry in the occurrence matrix 802 is accessed to determine if any additional one page documents are available S903. If not then the optimization process is completed and the balance of the documents will be added to the optimized print file S910. Similarly, if step S902 determined that less that one single page document is required, then the optimization is complete S910.

The first step in building the optimized print file, shown by way of example in Fig. 10 at 1001 is to move the contents of the print file 707 for document C into the optimized print file position one 1002, step S905. The pointer for document C was extracted from the ordered matrix using the offset value of two from the offset element 804 and used to access the correct document in the print file 707. Additional one page documents are moved if required, but due to the simplicity of the example only one document is moved. In order to ensure that no document is used twice S906 the single page document count is decremented by one and the offset is decremented to one. The net result ensures that the next time a one page document is needed, only one document is left and the offset will point to the pointer for document B in the ordered matrix 802. Steps S905 and S906 are repeated until sufficient one page documents are moved to the PSO point file (feedback loop not shown).

In similar manner the large document X is moved to the optimized print file 1001 item 1003 in step S907. For the example, both elements of the control matrix 805 are decremented by one leaving 2 large documents left and the offset of x-1 pointing to the document Z pointer in the ordered matrix 802, step S908. If additional documents need to be processed S909 i.e. all elements in the control matrix 805 are not zero, then the algorithm repeats. If single page documents are still available steps S901 through step 1009 repeat. Document B and Z are added to the optimized print file 1001 in this case. When all single page documents are used, i.e. item one in the 803 element is zero, or no additional single page documents are needed, steps 910 and S908 through the processing loop are executed until all elements in the control matrix are zero. The result is the transfer of documents from the print file 707 to the optimized print file 1001 with the highest page count documents transferred first. For the example, this places documents Y, D and A into the optimized print file.

When the process is complete, but additional presort groups need to be processed S708, the steps of Fig. 7 are repeated starting with step S702. Once all of the presort groups are processed, final processing is performed on the optimized print file S709. Actual printing will generate two print files, for this dual dependent channel document processing system, from the optimized print file. One print file will contain all of the first pages and the other file will contain the subsequent pages. The optimized print file is segregated into the two print files by readily available software which is not described in this specification. Fig. 4 illustrates the structure of the two files obtained by segregating the optimized print file and thus the resulting hard copy sheets after printing. Alternately, it is possible to segregate the print file into the two files at the time the optimized print file 1001 was created instead of using a post processing step. Finally the documents are printed and inserted S711 into envelopes on a document processing system 300.

While the foregoing has described what are considered to be the best mode and/or other examples, it is understood that various modifications may be made therein and that the subject matter disclosed herein may be implemented in various forms and examples, and that the teachings may be applied in numerous applications, only some of which have been described herein. It is intended by the following claims to claim any and all applications, modifications and variations that fall within the true scope of the present teachings.

## Claims

1. A method for optimizing a print file prior to generating print streams, the print streams destined for two or more dependent print stream processing modules of a document processing system, the method comprising steps of:
analyzing the print file; and
establishing an order of assignment of one or more documents to an optimized print file based on the analysis of the print file prior to the operation of the two or more dependent print stream processing modules,
wherein the establishing step assigns one or more single page documents to the optimized print file prior to assigning a multiple page document such that the operation time of the two or more dependent print stream processing modules are approximately balanced.

2. The method of claim 1, wherein the step of analyzing further comprises;
assigning pointers to the one or more documents of the print file; and
arranging the pointers such that they are representative of an order of the one or more documents of the print file by page count.

3. The method of claim 1, wherein the step of analyzing includes determining at least a number of occurrences of a particular page count that is common to the one or more documents.

4. The method of claim 1, wherein the step of analyzing includes determining at least a memory location relating to the position within the print file of each of the one or more documents.

5. The method of claim 1, wherein the one or more documents are presorted in accordance with an attribute common to the one or more documents.

6. A software product comprising: executable instructions for causing a programmable device to perform the method of claim 1, and a machine readable medium bearing the instructions.

7. A product comprising an optimized print file generated by the method of claim 1 and a machine readable medium hearing the optimized print file.

8. A method for generating an optimized version of a print file, the method comprising steps of:
generating an ordered representation of the print file, the print file specifying a plurality of single page count documents and multiple page count documents;
determining from the ordered representation of the print file a number of single page count documents to be placed ahead of a first page of a multiple page count document; and
assigning to the optimized version of the print file the number of single page count documents before assigning the first page of the multiple page count document.

9. The method of claim 8, wherein the step of determining further comprises
executing a recursive algorithm against the ordered representation of the print file.

10. The method of claim 8, wherein the ordered representation of the print file comprises one or more pointers.

11. The method of claim 8, wherein the plurality of documents are presorted in accordance with an attribute common to each of the plurality of documents.

12. The method of claim 8, wherein the step of assigning includes selecting the first page of a multiple page count document representing the highest page count

13. A software product comprising: executable instructions for causing a programmable device to perform the method of claim 8, and a machine readable medium bearing the instructions.

14. A product comprising an optimized print file generated by the method of claim 8, and a machine readable medium bearing the optimized print file.

15. A method for optimizing a print stream to be processed by first and second print stream processing modules, comprising:
assigning to the first print stream processing module at least a first page of a multiple page count document and a number of single page count documents; and
assigning to the second print stream processing module a number of pages representative of subsequent pages of the multiple page count document;
wherein the one or more single page count documents are assigned to the first print stream processing module prior to assigning the first page of the multiple page count document such that the operation times of the first print stream processing module and the second print stream processing module are approximately balanced.

16. A software product comprising: executable instructions for causing a programmable device to perform the method of claim 15, and a machine readable medium bearing the instructions.
